# EUROPEAN PATENT SPECIFICATION

(11) **EP 3 102 485 B1**
(45) Date of publication and mention of the grant of the patent: **26.02.2020**
(21) Application number: 15705358.8
(22) Date of filing: 30.01.2015
(51) Int. Cl.: B63H 25/42, G07C 5/08

(54) **A MARITIME VESSEL DYNAMIC POSITIONING CONTROL SYSTEM COMPRISING AN ACTIVITY MONITORING AND RECORDING SYSTEM**
DYNAMISCHES POSITIONIERSTEUERUNGSYSTEM FÜR EIN SEESCHIFF, DAS EIN AKTIVITÄTSÜBERWACHUNGS- SOWIE AUFZEICHNUNGSSYSTEM UMFASST
SYSTÈME DE CONTRÔLE DE POSITIONNEMENT DYNAMIQUE D'UN VAISSEAU MARITIME COMPRENANT UN SYSTÈME DE SURVEILLANCE ET D'ENREGISTREMENT D'ACTIVITÉ

(30) Priority: 05.02.2014 GB 201401976
(43) Date of publication of application: 14.12.2016
(73) Proprietor: ADI Strategy Limited, Chester CH2 1AJ (GB)
(72) Inventor: ENDERSBY, Daniel Stuart, Chester Cheshire CH2 1AJ (GB)
(74) Representative: Wynne-Jones IP Limited
(86) International application number: PCT/GB2015/050253
(87) International publication number: WO 2015/118306

(56) References cited:
- EP-A1- 1 158 273
- WO-A1-2009/020742
- US-A1- 2002 120 374
- US-A1- 2005 278 055
- US-A1- 2009 048 726

## Description

The present invention relates to an activity monitoring and recording system and method.

Off-shore work is often carried out on floating vessels and platforms which are typically required to remain localised over a particular area of the seabed. The localisation requires continuous supervision and control of the vessel by one or more operators to accommodate factors which act to displace the vessel from the desired location, such as wind speed, wind direction, sea current and the force of the sea current.

The so-called dynamic positioning of the vessel is achieved by the one or more operators controlling several thrusters associated with the vessel, to counter any fore/aft and port/starboard deviations. The operation of these thrusters is expensive and as such, unnecessary or excessive use of the thrusters is undesirable. It is therefore preferable that the vessel is maintained at the desired location with minimal operator intervention.

When training an operator it is desirable to record the activity of the operator so that a supervisor or similar can provide constructive feedback to the operator at a later date. It is also desirable for the operator to keep a record of their activity as an indication of their operating standard.

In accordance with a first aspect of the present invention, there is provided a maritime vessel dynamic positioning control system (10), the system comprising:
at least one dynamic positioning processor (11) arranged to receive dynamic positioning data of the maritime vessel from a plurality of sensors, and to receive data representative of the activity of an operator when controlling the dynamic positioning of the maritime vessel;
an activity monitoring and recording system (100) configured to monitor and record data relating to the dynamic positioning of the maritime vessel and data representative of the activity of an operator, the activity monitoring and recording system comprising:
   a monitoring arrangement (101) configured to monitor the dynamic positioning data and the data representative of the activity of the operator when controlling the dynamic positioning of the maritime vessel, the dynamic positioning data and data representative of the activity of the operator being communicated to the monitoring arrangement from the at least one dynamic positioning processor;
   an activity monitoring and recording system processor (102), communicatively coupled with the monitoring arrangement, which is configured to process the monitored data;
   at least one tag (103) comprising operator identification; and,
   a tag interrogating device (104) configured to interrogate the tag to determine the identity of the operator of the dynamic positioning system, and which is configured to record the processed data to the tag;
   an operator interface (12) comprising:
      a display screen (12a) configured to display the monitored data; and
      an input device (12b, 12c, 12d) configured to enter control signals by the operator to operate the thrusters of the maritime vessel to counter deviations from a desired position of the maritime vessel over the seabed based on the monitored data;
      an interface processor (13) which is arranged to receive data from the at least one dynamic positioning processor and display the data on the display screen..

In an embodiment, the activity monitoring and recording system is arranged to monitor and record data relating to the dynamic positioning of a floating maritime platform, in response to a sensed deviation of the platform from a desired location. The at least one tag comprises a unique operator specific reference, such that the system can determine the identity of the operator of the dynamic positioning system, and a memory store. The memory store is arranged to store data, such as data relating to one or more of a name of the vehicle, such as the maritime vessel name which the operator is to control, an international maritime organisation (IMO) number and the processed data relating to the dynamic positioning of the vessel, which may comprise one or more of a log of the time spent by the operator controlling the dynamic positioning of the vessel and any control signals applied by the operator during an operational shift. In an embodiment, the activity monitoring and recording system further comprises a separate memory store for recording the processed data.

In an embodiment, the activity monitoring and recording system further comprises communication means, such as a very small aperture terminal (VSAT) communicatively coupled with the activity monitoring and recording system processor, for communicating the processed data to a further memory store, such as a server located on-shore.

Embodiments of the present invention will now be described by way of example only and with reference to the accompanying drawings in which:
Figure 1 is a schematic illustration of an activity monitoring and recording system according to an embodiment of the present invention for monitoring and recording data relating to a dynamic positioning of a vehicle; and,
Figure 2 is a flow chart illustrating the sequence of steps associated with a method according to an embodiment of the present invention.

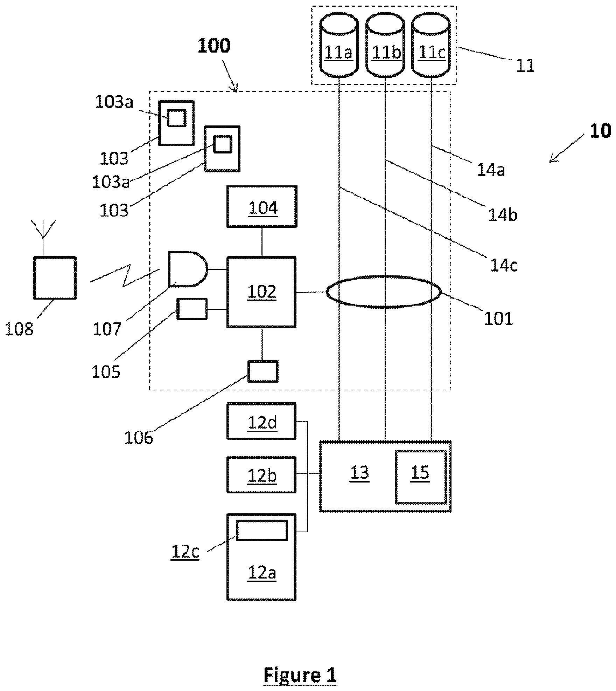

Referring to figure 1 of the drawings, there is illustrated a dynamic positioning system 10 for controlling the position of a vehicle, such as a floating vessel or platform (not shown). The dynamic positioning system 10 comprises at least one dynamic positioning processor 11 which is arranged to receive positional data from a plurality of sensors (not shown), the data relating to dynamic positioning parameters of the vessel. The parameters may include one or more of the actual position of the vessel and any fore/aft, port/starboard deviation from the desired position, the vessel heading, wind speed, wind direction, water current force and water current direction. The at least one dynamic positioning processor 11 may also be arranged to receive data relating to any thrusters (not shown) used for manoeuvring the vessel and an operational status of the thrusters, such as offline, active, disabled, inactive.

The dynamic positioning system 10 further comprises an operator interface 12, which comprises a display screen 12a and one or more input devices, such as a joystick 12b, one or more touch sensitive areas on the screen 12c and/or a keyboard 12d, for example, for enabling one or more operators to interact with the system 10 and enter control signals for operating the thrusters and thus controlling the positioning of the vessel (not shown). The interface further comprises a processor 13 which is arranged to receive as input, data from the at least one dynamic positioning processor 11 and display the data on the display screen 12a.

The data received by the at least one dynamic positioning processor 11 is communicated to the interface processor 13 via a communications link 14, which may comprise a serial communications link, an Ethernet connection, or a process-field-bus (Profibus) or a controller-area-network bus (Canbus), for example. In order to provide some redundancy in the event that the dynamic positioning processor 11 fails, the system 10 may beneficially comprise two or more dynamic positioning processors 11a-c, each dynamic positioning processor 11a-c being communicatively coupled to the interface processor 13 via a respective communications link 14a-c.

Figure 1 further illustrates an activity monitoring and recording system 100 according to an embodiment of the present invention for monitoring and recording data relating to the dynamic positioning of a vehicle. The monitoring and recording system 100 comprises a monitoring arrangement 101 for monitoring data relating to the positional state of the vessel, namely the dynamic positioning parameters and data relating to the use of any thrusters, which is communicated along the communication links 14a-c. The monitoring arrangement 101 may comprise a direct connection to the dynamic positioning system 10, such as via a similar serial communications connection, an Ethernet connection, or a Profibus or a Canbus. Alternatively, the monitoring arrangement 101 may comprise a network analyser sniffer (not shown) for example, which is arranged to the monitor the transmission of data along the communication links 14a-c. In either case, the monitored data is communicated to a processor 102 associated with the system 100 for subsequent processing.

The monitoring and recording system 100 further comprises one or more operator identification tags 103, such as smart cards, which are interrogable via an interrogation device 104, such as a smart card reader and writer, which is communicatively coupled with the processor 102. Each tag 103 associated with the system 100 is specific to a particular operator and comprises a unique operator identification reference. The tags 103 further comprise a memory store 103a for enabling data to be recorded thereto via the interrogation device 104, such as the name of the vessel and the international maritime organisation or IMO number of the vessel.

The monitoring and recording system 100 may further comprise a display 105 for displaying the operator or operators operating the dynamic positioning system 10 and a keyboard 106, or other well-known input devices for enabling the operator to interface with the monitoring and recording system 100. For example, an operator wishing to review their time spent operating the dynamic positioning system 10 and their operational activity over the operational shift, may interface with the monitoring and recording system 100 using the input device 106 to display the relevant information on the display screen 105. An operator may also interact with the monitoring and recording system 100 via the display 105 and input device 106 to review the operational state of the monitoring arrangement 101 and interrogation device 104, for example.

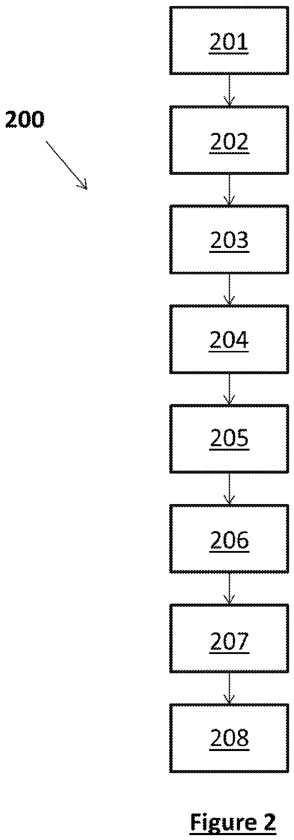

Referring to figure 2 of the drawings, there is illustrated an activity monitoring and recording method 200 according to an embodiment of the present invention for monitoring and recording data relating to the dynamic positioning of a vehicle, such as a floating vessel or platform (not shown). One or more operators desiring to control the dynamic positioning of the vessel first enters, swipes or otherwise presents their tag 103 to the interrogation device 104 at step 201, so that the device 104 can interrogate the tag 103 to determine the identity of the at least one operator at step 202. The display 105 associated with the monitoring and recording system 100 subsequently displays the name of the at least one operator who has registered on the system at step 203. If required, the at least one operator may be further required to enter an identification code, such as a personal identification number, via the input device 106, at step 204, to further validate the authenticity of the operator.

In the event that several operators have registered on the system, then the particular operator responsible for entering control signals may be first selected via the input device 106, at step 205, such that the system 100 can associate the activity with the corresponding operator. The particular operator subsequently controls the dynamic positioning of the vessel via the dynamic positioning system interface 12 by varying the operational state of one or more thrusters (not shown) for example, in response to the parameters influencing the vessel position, to maintain a suitable positioning of the vessel. The operator activity, namely the particular control signals applied during the operation of the dynamic positioning system 10 together with the parameters influencing the dynamic positioning of the vessel are monitored by the monitoring arrangement 101 via the communication links 14a-c and recorded by the processor 102 onto a memory store 15 associated with the dynamic positioning system 10 at step 206. The registration of the at least one operator on the monitoring and recording system, enables the system to assign the particular activity to the respective operator, such that the activity of the or each operator can be later reviewed. The operator activity is also recorded on the memory store 103a associated with their respective tag 103, via the interrogation device 104 at step 207 and provides the operator with a personal record of their operational activity.

The system 100 further comprises communication means 107, such as a very small area terminal or VSAT, communicatively coupled to the processor 102 which is arranged to communicate the operator activity, together with the identity of the or each operator to a remote memory store 108, such as server located onshore at step 208. This operator record facilitates a future assessment of operator competence in relation to preferred operational criteria and thus enables a tailored training programme to address the weaker aspects of the operators control.

From the foregoing therefore, it is evident that the system and method provide for a simple yet effective means of monitoring and recording the operator activity.

## Claims

1. A maritime vessel dynamic positioning control system (10), the system comprising:
at least one dynamic positioning processor (11) arranged to receive dynamic positioning data of the maritime vessel from a plurality of sensors, and to receive data representative of the activity of an operator when controlling the dynamic positioning of the maritime vessel;
an activity monitoring and recording system (100) configured to monitor and record data relating to the dynamic positioning of the maritime vessel and data representative of the activity of an operator, the activity monitoring and recording system comprising:
a monitoring arrangement (101) configured to monitor the dynamic
positioning data and the data representative of the activity of the operator when controlling the dynamic positioning of the maritime vessel, the dynamic positioning data and data representative of the activity of the operator being communicated to the monitoring arrangement from the at least one dynamic positioning processor;
an activity monitoring and recording system processor (102), communicatively coupled with the monitoring arrangement, which is configured to process the monitored data;
at least one tag (103) comprising operator identification; and,
a tag interrogating device (104) configured to interrogate the tag to determine the identity of the operator of the dynamic positioning system, and which is configured to record the processed data to the tag;
an operator interface (12) comprising:
a display screen (12a) configured to display the monitored data; and
an input device (12b, 12c, 12d) configured to enter control signals by the operator to operate the thrusters of the maritime vessel to counter deviations from a desired position of the maritime vessel over the seabed based on the monitored data;
an interface processor (13) which is arranged to receive data from the at least one dynamic positioning processor and display the data on the display screen.

2. A system according to claim 1, wherein the tag comprises a unique operator reference and a memory store (103a).

3. A system according to claim 2, wherein the memory store comprises data relating to one or more of a name of the maritime vessel, an international maritime organisation number.

4. A system according to any preceding claim, wherein the activity monitoring and recording system further comprises communication means (107) communicatively coupled with the activity monitoring and recording system processor for communicating the processed data to a further memory store (108).

## Patentansprüche

1. Dynamisches Positionierungssteuersystem für Seeschiffe (10), wobei das System Folgendes umfasst:
mindestens einen dynamischen Positionierungsprozessor (11), der dafür ausgelegt ist, dynamische Positionierungsdaten des Seeschiffs von mehreren Sensoren zu empfangen, und Daten zu erhalten, die für die Tätigkeit eines Betreibers bei der Steuerung der dynamischen Positionierung des Seeschiffs repräsentativ sind;
ein Aktivitätsüberwachungs- und -aufzeichnungssystem (100), das zum Überwachen und Aufzeichnen von Daten in Bezug auf die dynamische Positionierung des Seeschiffs und von Daten, die für die Aktivität eines Betreibers repräsentativ sind, konfiguriert ist, wobei das Aktivitätsüberwachungs- und -aufzeichnungssystem Folgendes umfasst:
eine Überwachungsanordnung (101), die dafür konfiguriert ist, die dynamischen Positionierungsdaten und die Daten zu überwachen, die für die Aktivität des Bedieners repräsentativ sind, wenn die dynamische Positionierung des Seeschiffs gesteuert wird, wobei die dynamischen Positionierungsdaten und Daten, die für die Tätigkeit des Bedieners repräsentativ sind, von dem mindestens einen dynamischen Positionierungsprozessor an die Überwachungsanordnung übermittelt werden;
einen Aktivitätsüberwachungs- und Aufzeichnungssystemprozessor (102), der kommunikativ mit der Überwachungsanordnung gekoppelt ist und dafür konfiguriert ist, die überwachten Daten zu verarbeiten;
mindestens ein Etikett (103), das eine Bedieneridentifikation umfasst; und,
eine Etikettenabfragevorrichtung (104), die dafür konfiguriert ist, das Etikett abzufragen, um die Identität des Bedieners des dynamischen Positionierungssystems zu bestimmen, und die dafür konfiguriert ist, die verarbeiteten Daten auf dem Etikett aufzuzeichnen;
eine Bedienerschnittstelle (12), die Folgendes umfasst:
einen Anzeigebildschirm (12a), der zum Anzeigen der überwachten Daten konfiguriert ist; und
eine Eingabevorrichtung (12b, 12c, 12d), die zum Eingeben von Steuersignalen durch den Bediener zum Betreiben der Triebwerke des Seeschiffs konfiguriert ist, um Abweichungen von einer gewünschten Position des Seeschiffs über dem Meeresboden auf der Grundlage der überwachten Daten entgegenzuwirken;
einen Schnittstellenprozessor (13), der dafür ausgelegt ist, Daten von dem mindestens einen dynamischen Positionierungsprozessor zu empfangen und die Daten auf dem Anzeigebildschirm anzuzeigen.

2. System nach Anspruch 1, wobei das Etikett eine eindeutige Bedienerreferenz und einen Speicherspeicher (103a) umfasst.

3. System nach Anspruch 2, wobei der Speicher Daten umfasst, die sich auf einen Namen des Seeschiffs und/oder eine Nummer der internationalen Seeschifffahrtsorganisation beziehen.

4. System nach einem der vorhergehenden Ansprüche, wobei das Aktivitätsüberwachungs- und -aufzeichnungssystem ferner ein Kommunikationsmittel (107) umfasst, das kommunikativ mit dem Aktivitätsüberwachungs- und Aufzeichnungssystemprozessor gekoppelt ist, um die verarbeiteten Daten an eine weitere Speichervorrichtung (108) zu übermitteln.

## Revendications

1. Système de commande de positionnement dynamique de navire (10), le système comprenant :
au moins un processeur de positionnement dynamique (11) agencé pour recevoir des données de positionnement dynamique du navire d'une pluralité de détecteurs, et pour recevoir des données représentatives de l'activité d'un opérateur quand il commande le positionnement dynamique du navire ;
un système de surveillance et d'enregistrement d'activité (100) configuré pour surveiller et enregistrer des données concernant le positionnement dynamique du navire et des données représentatives de l'activité d'un opérateur, le système de surveillance et d'enregistrement d'activité comprenant :
un agencement de surveillance (101) configuré pour surveiller les données de positionnement dynamique et les données représentatives de l'activité de l'opérateur quand il commande le positionnement dynamique du navire, les données de positionnement dynamique et les données représentatives de l'activité de l'opérateur étant communiquées à l'agencement de surveillance à partir de l'au moins un processeur de positionnement dynamique ;
un processeur de système de surveillance et d'enregistrement d'activité (102), couplé en communication avec l'agencement de surveillance, qui est configuré pour traiter les données surveillées ;
au moins une étiquette (103) comprenant l'identification d'un opérateur ; et,
un dispositif d'interrogation d'étiquette (104) configuré pour interroger l'étiquette pour déterminer l'identité de l'opérateur du système de positionnement dynamique, et qui est configuré pour enregistrer les données traitées vers l'étiquette ;
une interface d'opérateur (12) comprenant :
un écran d'affichage (12a) configuré pour afficher les données surveillées ; et
un dispositif d'entrée (12b, 12c, 12d) configuré pour l'entrée de signaux de commande par l'opérateur pour faire fonctionner les propulseurs du navire pour lutter contre les déviations par rapport à une position voulue du navire au-dessus du fond marin sur la base des données surveillées ;
un processeur d'interface processor (13) qui est agencé pour recevoir des données de l'au moins un processeur de positionnement dynamique et afficher les données sur l'écran d'affichage.

2. Système selon la revendication 1, dans lequel l'étiquette comprend une seule référence d'opérateur et une mémoire (103a).

3. Système selon la revendication 2, dans lequel la mémoire comprend des données relatives à un ou plusieurs éléments parmi un nom du navire, un numéro d'organisation maritime internationale.

4. Système selon l'une quelconque des revendications précédentes, dans lequel le système de surveillance et d'enregistrement d'activité comprend en outre un moyen de communication (107) couplé en communication avec le processeur de système de surveillance et d'enregistrement d'activité destiné à communiquer les données traitées à une mémoire supplémentaire (108).
